# FASCICULE DE BREVET EUROPEEN

(11) **EP 2 829 364 B1**
(45) Date de publication et mention de la délivrance du brevet: **16.03.2016**
(21) Numéro de dépôt: 14306177.8
(22) Date de dépôt: 21.07.2014
(51) Int. Cl.: B25J 5/02, B61J 1/02

(54) **Module de transfert d'un chariot robotisé entre des éléments de guidage non aboutés et adjacents**
Transfermodul eines robotergesteuerten Wagens zwischen zwei verbundenen und aneinandergrenzenden Führungselementen
Module for transferring a robotic carriage between guiding elements that are not joined end-to-end and adjacent

(30) Priorité: 25.07.2013 FR 1357337
(43) Date de publication de la demande: 28.01.2015
(73) Titulaire: Lucas France, 33430 Bazas (FR)
(72) Inventeur: Lucas, Jean-Jacques, 33124 Savignac (FR)
(74) Mandataire: Fantin, Laurent

(56) Documents cités:
- WO-A1-00/34100
- DE-A1-102010 039 955
- FR-A1- 2 437 465
- JP-A- H0 733 242
- US-A- 189
- US-A- 4 094 252
- US-A1- 2005 274 276

## Description

La présente invention est relative au transfert d'un chariot robotisé d'un premier élément de guidage vers un second élément de guidage.

Dans diverses applications industrielles, des chariots robotisés sont utilisés pour transporter diverses charges d'un point à un autre, ou pour déplacer divers outils d'une position de travail à une autre.

A cet effet, ces chariots robotisés sont alimentés électriquement, par exemple par l'intermédiaire de chaînes porte-câbles, et ils intègrent des moyens électriques et mécaniques leur permettant de se déplacer en translation de manière autonome sur des éléments de guidage. Ces éléments de guidage prennent la forme de rails droits ou courbes, disposés horizontalement, verticalement ou inclinés le long d'une pente.

Selon les applications, ces éléments de guidage peuvent être disposés au sol, en hauteur, sur différents niveaux, ou entre ces différents niveaux.

Ces chariots robotisés et ces éléments de guidage sont utilisés pour réaliser des robots cartésiens capables de déplacer une charge ou un outil en translation le long d'un seul axe, de deux ou trois axes perpendiculaires entre eux, ou le long de quatre axes distincts.

Par exemple, ces chariots et ces éléments de guidage peuvent être utilisés pour robotiser des portiques de levage de type Gantry, ou des portiques de levage avec un bras en porte-à-faux. Dans certaines applications, les chariots robotisés supportent directement les équipements liés à leur utilisation, comme par exemple des moyens de préhension pour manutentionner différentes charges.

Cependant, dans d'autres applications plus exigeantes comme par exemple des opérations d'usinage, les chariots robotisés et les éléments de guidage sont utilisés pour transporter des robots poly-articulés capables de déplacer une charge ou un outil en rotation et/ou en translation plus librement autour de différents axes.

Il existe aussi des applications dans lesquelles ces chariots robotisés et ces éléments de guidage sont utilisés pour réaliser des robots hybrides : mi-cartésiens, mi-poly-articulés.

Dans des applications logistiques, des robots de manutention sont montés sur des chariots guidés en translation au-dessus d'un ou plusieurs niveaux de stockage afin de transporter des marchandises ou des sous-ensembles de produits, par exemple palettisés, de l'entrée du lieu de stockage vers leur emplacement de stockage, ou de cet emplacement vers la sortie du lieu de stockage.

Dans de telles applications logistiques, il est nécessaire que les chariots se déplacent le plus rapidement possible d'un point à un autre du lieu de stockage afin d'augmenter le volume horaire de traitement des marchandises, ou des sous-ensembles de produits, sur le lieu de stockage. Pour obtenir le volume horaire de traitement souhaité, ce sont essentiellement les moyens électriques et mécaniques de déplacement des chariots robotisés qui doivent être convenablement dimensionnés en fonction des charges maximales transportées et des efforts subis lors des déplacements et des accélérations des chariots.

Dans certains systèmes de production du secteur automobile ou aéronautique, des robots de manutention sont montés sur des chariots guidés en translation sur des éléments de guidage afin de transporter des pièces à usiner, ou à transformer, d'un îlot de travail à un autre, à l'intérieur d'un atelier ou même d'une usine entière.

Dans d'autres systèmes de production, des robots d'usinage, ou des robots équipés d'autres outils de transformation, sont montés sur des chariots guidés en translation sur des éléments de guidage afin d'emmener l'outil du robot dans différentes positions autour d'une même pièce au sein d'un même îlot de travail.

En variante, les robots d'usinage ou de transformation sont montés sur des chariots guidés en translation sur des éléments de guidage dans un même îlot de travail afin d'emmener l'outil du robot vers différentes pièces sur lesquelles une même opération doit être réalisée.

Dans de tels systèmes de production, les chariots robotisés doivent se déplacer de manière précise sur les éléments de guidage car la qualité du travail réalisé est dépendante de la position de l'outil par rapport à la pièce à usiner ou à transformer.

En vue d'obtenir des déplacements précis des chariots robotisés, les éléments de guidage comprennent des crémaillères sur lesquelles engrènent des pignons appartenant aux moyens électriques et mécaniques de déplacement des chariots robotisés.

La présente invention concerne les applications telles que celles qui viennent d'être décrites, dans lesquelles des chariots robotisés doivent se déplacer en translation sur des éléments de guidage rapidement et précisément, pour donner un ordre d'idées : à des vitesses de 1 à 5 m/s, en pouvant atteindre des accélérations supérieures à 6 m/s², et avec une précision de l'ordre de 0,05 millimètres.

Actuellement, les éléments de guidage utilisés dans ces applications exigeantes prennent la forme de profilés, rectilignes ou courbes, équipés de crémaillères et d'autres équipements électriques ou mécaniques comme des moyens d'alimentation électrique des chariots robotisés.

Ces profilés de guidage peuvent être fabriqués à la longueur de guidage souhaitée, mais dans ce cas, leur coût de fabrication augmente considérablement dès que la longueur de guidage dépasse quelques mètres, et surtout si les charges transportées par les chariots robotisés exigent une grande rigidité.

De plus, ces profilés fabriqués à la demande ne permettent pas de faire évoluer l'installation logistique ou de production en modifiant le tracé des routes de guidage des chariots.

Enfin, ces profilés monolithiques ne permettent pas, ou difficilement, de réaliser des routes de guidage en circuit fermé, c'est-à-dire formant une boucle.

Aussi, pour diminuer les coûts de fabrication, permettre de faire évoluer les installations de guidage des chariots, et créer facilement des routes de guidage en circuit fermé, il a été développé des éléments de guidage modulaires, rectilignes ou courbes et de quelques mètres de longueur.

Ces éléments de guidage modulaires peuvent être aboutés les uns aux autres de manière précise afin de réaliser la route de guidage souhaitée.

Toutefois, ces éléments de guidage modulaires présentent aussi des inconvénients.

En effet, qu'ils soient agencés en circuit ouvert ou en circuit fermé, les éléments de guidage modulaires actuels sont fixes et ils ne permettent pas le croisement de deux chariots situés sur une même route de guidage.

De plus, et toujours en raison de leur immobilité, les éléments de guidage modulaires actuels ne permettent pas de transférer facilement un chariot robotisé d'une route de guidage à une autre, c'est-à-dire entre deux éléments de guidage non aboutés.

Le document JP 07 033 242 A décrit un module de transfert selon le préambule de la revendication 1. Cependant, l'agencement respectif des moyens de mise en translation et de mise en rotation ne permet qu'un très petit débattement.

Aussi, la présente invention vise à remédier aux inconvénients de l'art antérieur.

A cet effet, l'invention a pour objet un module de transfert d'un chariot robotisé entre des éléments de guidage non aboutés et adjacents, ce module de transfert et ces éléments de guidage comprenant des moyens de guidage en translation de ce chariot le long de leurs axes longitudinaux respectifs, le module de transfert comprenant un corps s'étendant le long de son axe longitudinal et ce corps étant relié à un bâti par l'intermédiaire d'un support.

Selon l'invention, le module de transfert comprend des moyens de mise en translation reliant le corps à un châssis configurés pour assurer la translation dudit corps par rapport audit châssis le long de l'axe longitudinal du module et des moyens de mise en rotation reliant ledit châssis au support configurés pour faire pivoter le châssis autour d'un axe de croisement perpendiculaire à l'axe longitudinal du module.

Grâce à la combinaison de ses moyens de mise en rotation et de mise en translation, le module de transfert selon l'invention peut être aligné puis abouté de manière précise avec un ou plusieurs élément(s) de guidage adjacents, la précision de l'aboutement garantissant la précision de déplacement et de positionnement des chariots nécessaire dans certaines applications logistiques, automobiles ou aéronautiques. De plus, les moyens de mise en translation étant positionnés ente le corps et un châssis relié par les moyens de mise en rotation au support, il est possible d'écarter le corps du module de transfert d'un premier élément de guidage pour permettre audit corps de pivoter selon l'axe de croisement. Après pivotement du corps, il est possible de le translater de manière à l'abouter à un autre élément de guidage.

Pour garantir la précision de l'aboutement, l'invention prévoit en outre des moyens de positionnement par centrage entre le module de transfert et le ou les élément(s) de guidage adjacents auquel (auxquels) il doit être abouté.

Lorsqu'il est disposé en bout d'un unique élément de guidage, le module de transfert selon l'invention peut effectuer des rotations sur 180° pour modifier l'orientation d'un chariot robotisé ou pour inverser les positions de deux chariots robotisés.

Dans le même cas de figure, ou lorsqu'il est intercalé, avec le jeu d'aboutement nécessaire, entre deux éléments de guidage appartenant à une même route de guidage le long d'un même axe, le module de transfert selon l'invention permet le croisement de deux chariots situés sur cette route de guidage, et qu'elle soit en circuit ouvert ou en circuit fermé.

Enfin, lorsqu'il est intercalé entre au moins trois éléments de guidage définissant une intersection entre différentes routes de guidage, le module de transfert selon l'invention permet d'aiguiller un chariot robotisé vers l'une de ces différentes routes de guidage.

Grâce au module de transfert selon l'invention, il devient possible de réaliser des routes de guidage qui s'entrecroisent plusieurs fois de manière à former un maillage dans un atelier ou une usine.

Ainsi, dans le cadre de l'utilisation d'une flotte de chariots robotisés se déplaçant sur des routes maillées, chaque chariot peut utiliser différents trajets pour se rendre d'un point à un autre, ou pour éviter un autre chariot.

Enfin, d'un point de vue plus global, le module de transfert selon l'invention augmente les possibilités de faire évoluer les installations de guidage des chariots robotisés, et il facilite la mise en oeuvre de ces évolutions.

Avantageusement, et en vue d'éviter de multiplier le nombre de modules de transfert dans une installation de guidage de chariots robotisés, l'invention prévoit aussi de monter le support d'un module de transfert sur d'autres moyens complémentaires de guidage en translation, horizontale verticale ou inclinée, et/ou de guidage en rotation, ces moyens de mise en mouvement complémentaires étant utilisés pour raccourcir et accélérer le trajet d'un module de transfert entre plusieurs routes de guidage, éventuellement situées à différents niveaux.

D'autres caractéristiques et avantages ressortiront de la description qui va suivre de l'invention, description donnée à titre d'exemple uniquement, en regard des dessins annexés sur lesquels :
- la figure 1 représente une vue en perspective d'une première installation de guidage de chariots robotisés intégrant deux modules de transfert selon l'invention,
- la figure 2 représente une vue en perspective d'un module de transfert selon l'invention monté sur un bâti par l'intermédiaire de son support,
- la figure 3 représente une vue en éclaté d'un module de transfert selon l'invention,
- la figure 4 représente une vue en perspective d'une deuxième installation de guidage de chariots robotisés intégrant des modules de transfert selon l'invention avec des moyens de mise en mouvement complémentaires,
- la figure 5 représente une vue de détails en perspective d'une partie de la deuxième installation de guidage de chariots robotisés intégrant des modules de transfert selon l'invention avec des moyens de mise en mouvement complémentaires,
- la figure 6 représente une vue en perspective d'une partie d'une installation de guidage de chariots robotisés intégrant des modules de transfert selon l'invention et autorisant des déplacements d'une charge ou d'un outil vers des emplacements inaccessibles ou difficilement accessibles avec des installations de guidage selon l'art antérieur, et
- la figure 7 représente une vue en perspective d'une installation de guidage de chariots robotisés intégrant des modules de transfert selon l'invention, les modules de transfert et les éléments de guidage formant cette installation étant montés de manière déportée.

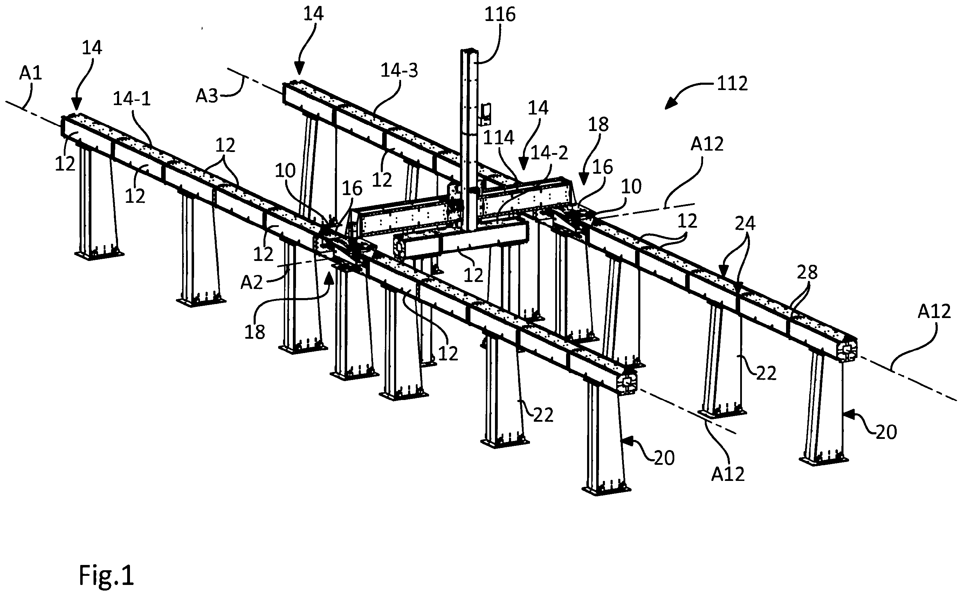

Comme l'illustre la figure 1, le module de transfert 10 selon l'invention est destiné à être intercalé entre des éléments de guidage 12 non aboutés, adjacents, et utilisés pour la réalisation de routes de guidage 14 de chariots robotisés 16.

Par éléments de guidage 12 adjacents, l'invention entend des éléments de guidage 12 situés à proximité du module de transfert 10 et positionnés de manière à ce que le module 10 selon l'invention puisse être abouté à ces derniers par un court déplacement en translation, de l'ordre de quelques centimètres pour donner un ordre d'idées.

Avantageusement, les éléments de guidage 12 sont de type modulaires, et ils sont aboutés les uns aux autres pour former une route de guidage 14.

Dans l'exemple représenté en figure 1, les éléments de guidage 12 sont aboutés de manière à former trois routes de guidage : deux routes de guidages 14-1 et 14-3 s'étendant le long d'axes de guidage A1 et A3 parallèles, et une route de guidage 14-2 s'étendant le long d'un axe de guidage A2 perpendiculaire aux deux premiers axes de guidage A1 et A3.

De manière générale, le module de transfert 10 selon l'invention est destiné à être placé dans le prolongement des éléments de guidage 12 d'une route de guidage 14, ou, comme l'illustre la figure 1, disposé aux intersections 18 entre différentes routes de guidage 14-1, 14-2, 14-3.

Comme les éléments de guidage 12, le module de transfert 10 est supporté par un bâti 20.

Dans l'exemple représenté en figure 1, le bâti 20 prend la forme de piliers 22 au sommet desquels sont montés les éléments de guidage 12 et les modules de transfert 10.

Toutefois, en variante, des éléments de guidage 12 et des modules de transfert 10 selon l'invention peuvent être montés au sol, ou suspendus au-dessus du sol par tous moyens appropriés. En vue du guidage d'un ou plusieurs chariots robotisés 16, les éléments de guidage 12 comprennent des moyens de guidage 24 en translation d'un tel chariot 16 le long de leurs axes longitudinaux respectifs A12.

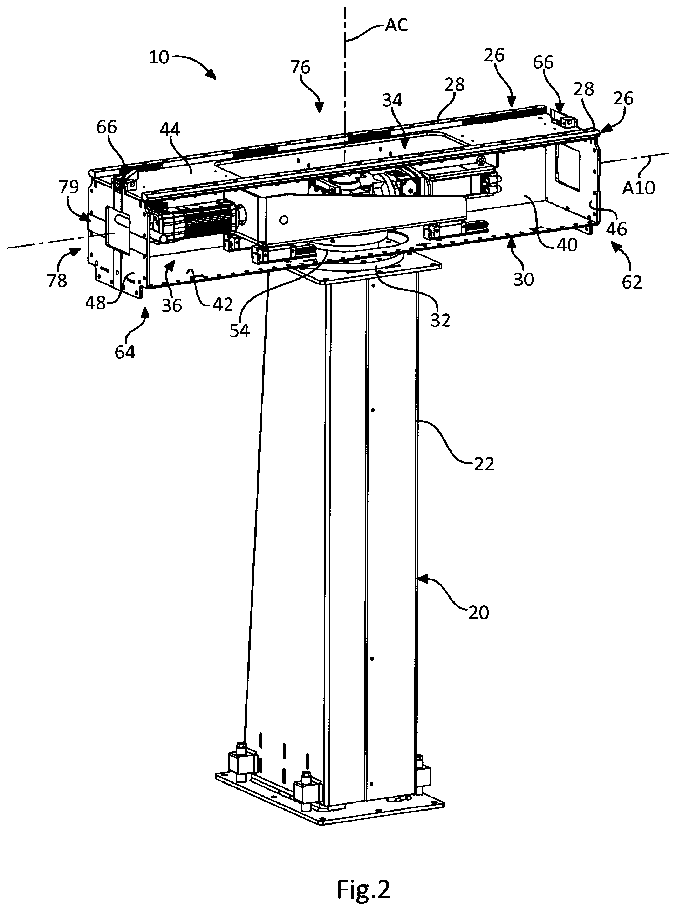

Comme l'illustre plus en détails la figure 2, le module de transfert 10 comprend aussi des moyens de guidage 26 en translation d'un chariot 16 le long de son axe longitudinal A10.

Dans un mode de réalisation préféré, les moyens de guidage 26 du module 10 comme les moyens de guidage 24 des éléments de guidage 12 prennent la forme de deux crémaillères 28 montées parallèlement et en vis-à-vis le long de l'axe longitudinal A10 du module 10, respectivement le long des axes longitudinaux A12 de ces éléments 12.

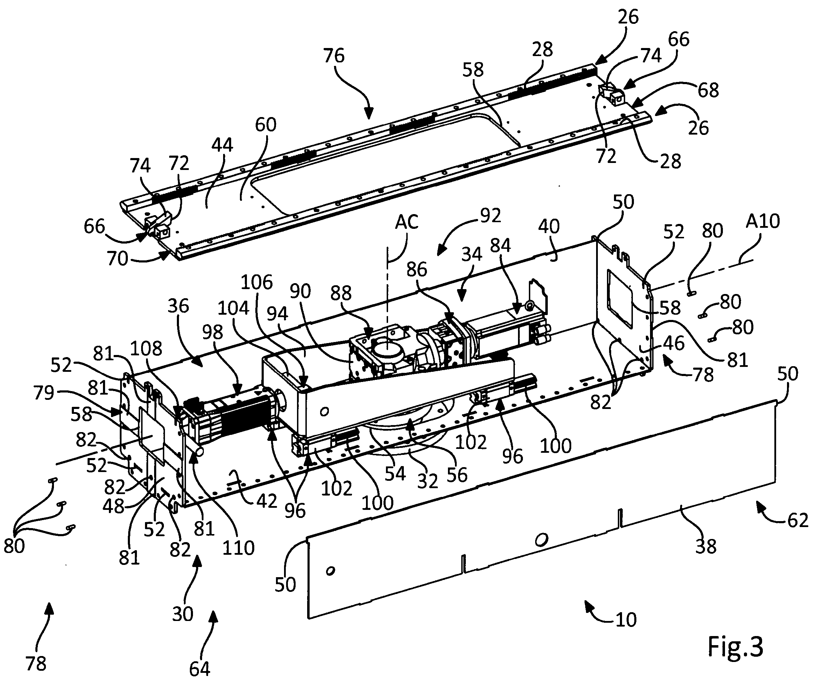

Selon l'invention, et comme l'illustrent les figures 2 et 3, le module de transfert 10 comprend un corps 30 s'étendant le long de son axe longitudinal A10 et ce corps 30 est monté sur le bâti 20 par l'intermédiaire d'un support 32.

Selon une caractéristique importante, le module de transfert 10 comprend des moyens de mise en rotation 34 de son corps 30 par rapport au support 32 autour d'un axe de croisement AC perpendiculaire à l'axe longitudinal A10 du module 10.

En complément, ces moyens de mise en rotation 34 du corps 30 sont associés à des moyens de mise en translation 36 du corps 30 par rapport au support 32 le long de l'axe longitudinal A10 du module 10.

Grâce aux moyens de mise en rotation 34, le corps 30 du module 10 peut prendre différentes orientations autour de l'axe de croisement AC, dont des orientations dans lesquelles l'axe longitudinal A10 du module 10 se trouve dans le prolongement de l'axe longitudinal A12 d'un élément de guidage 12 adjacent.

Et, grâce aux moyens de mise en translation 36, le corps 30 du module 10 peut être abouté à un élément de guidage 12 adjacent lorsque le corps 30 de ce module 10 se situe dans le prolongement de cet élément de guidage 12.

Ou, grâce aux moyens de mise en translation 36, le corps 30 du module 10 peut être disjoint d'un élément de guidage 12 adjacent auquel il est abouté, cela afin de modifier son orientation et de l'aligner dans le prolongement d'un autre élément de guidage 12 adjacent.

Avantageusement, les moyens de mise en translation 36 et les moyens de mise en rotation 34 sont conçus de manière à permettre respectivement des déplacements précis en translation et en rotation, horaire ou antihoraire, du corps 30 du module 10 par rapport à son support 32.

Pour donner un ordre d'idées, les moyens de mise en translation 36 offrent une précision de l'ordre de 0,05 millimètres, et les moyens de mise en rotation 34 offrent une précision de l'ordre de 0,05 millimètres.

Selon l'invention, les moyens de mise en rotation 34 et les moyens de mise en translation 36 sont logés dans le corps 30 du module 10.

Ainsi, ces moyens de mise en mouvement du corps 30 ne viennent pas perturber les déplacements des chariots robotisés 16 sur les moyens de guidage 26, ainsi que les déplacements du module 10 dans son environnement et par rapport au bâti 20.

En vue de cette intégration des moyens de mise en rotation 34 et des moyens de mise en translation 36, le corps 30 du module 10 est un assemblage de six parois : deux parois latérales droite 38 et gauche 40, deux parois longitudinales inférieure 42 et supérieure 44, et deux parois d'extrémité avant 46 et arrière 48, cet assemblage étant illustré en éclaté en figure 3.

En vue de leur préassemblage, les parois latérales droite 38 et gauche 40 et la paroi longitudinale inférieure 42 sont munies de languettes 50 à leurs extrémités, et des encoches 52 sont réalisées en périphérie extérieure des parois d'extrémité avant 46 et arrière 48.

En vue de l'assemblage final du corps 30, les parois adjacentes sont solidarisées les unes aux autres par soudage.

Dans un mode de réalisation préféré, les parois latérales droite 38 et gauche 40 et les parois longitudinales inférieure 42 et supérieure 44 sont sensiblement rectangulaires, les parois d'extrémité avant 46 et arrière 48 sont sensiblement carrées, et le corps 30 est sensiblement parallélépipédique.

Selon l'invention, le corps 30 du module 10 est relié aux moyens de mise en translation 36, ces moyens de mise en translation 36 sont reliés aux moyens de mise en rotation 34, et ces moyens de mise en rotation 34 sont reliés au support 32 par une liaison 56.

Et, en raison du logement des moyens de mise en rotation 34 et des moyens de mise en translation 36 à l'intérieur du corps 30 du module, la paroi longitudinale inférieure 42 comprend une lumière 54 pour le passage de la liaison 56 des moyens de mise en rotation 34 au support 32. En outre, la lumière 54 a une forme oblongue autorisant la translation du corps 30 par rapport au support 32.

En vue d'opérations de maintenance ou de réparation des moyens de mise en rotation 34 et en translation, 36, au moins une paroi 38,40,42,44,46,48 du corps 30 du module 10 comprend une ouverture d'accès 58 à l'intérieur du corps 30 du module.

Dans un mode de réalisation préféré, la paroi longitudinale supérieure 44 et les parois d'extrémité avant 46 et arrière 48 comprennent chacune une ouverture d'accès 58 à l'intérieur du corps 30 du module.

Dans une variante préférée de réalisation du module de transfert 10, la paroi longitudinale supérieure 44 reçoit sur sa surface extérieure 60 les moyens de guidage 26 en translation d'un chariot robotisé 16 le long de l'axe longitudinal A10 du module 10.

Dans d'autres variantes, les moyens de guidage 26 en translation d'un chariot robotisé 16 peuvent être supportés par les parois latérales droite 38 ou gauche 40.

Et, dans une autre variante dans laquelle le module 10 est suspendu par son support 32, la lumière 54 pour le passage de la liaison 56 des moyens de mise en rotation 34 étant alors prévue dans la paroi longitudinale supérieure 44, les moyens de guidage 26 en translation d'un chariot robotisé 16 peuvent être supportés par la paroi longitudinale inférieure 42.

Pour sécuriser les déplacements d'un chariot robotisé 16 sur un module 10 selon l'invention, le corps 30 comprend à ses extrémités avant 62 et arrière 64 des moyens d'arrêt 66 de la translation d'un chariot robotisé 16 le long de son axe longitudinal A10.

Plus précisément, ces moyens d'arrêt 66 de la translation d'un chariot robotisé 16 se situent aux extrémités avant 68 et arrière 70 de la paroi 38,40,42,44,46,48, de préférence la paroi longitudinale supérieure 44, recevant les moyens de guidage 26 en translation d'un chariot robotisé 16.

De préférence, les moyens d'arrêt 66 de la translation d'un chariot robotisé 16 prennent la forme de butées 72 rétractables à came 74.

Ces butées 72 sont montées pivotantes, et leur surface supérieure fait office de came 74.

Par défaut, et par exemple sous l'effet d'un ressort, ces butées 72 sont relevées. On évite ainsi que le chariot 16 tombe dans le vide lorsqu'il se déplace vers l'une des extrémités avant 62 ou arrière 64 du corps 30 non aboutée à un élément de guidage 12.

Avantageusement, des moyens mécaniques, tel un mécanisme à ressort, autorisent une rétraction automatique d'une butée 72 lorsque l'extrémité 62,64 où se situe cette butée 72 est aboutée à un élément de guidage 12.

Toujours par défaut, les cames 74 des deux butées 72 sont inclinées et s'élèvent vers le centre 76 du module 10 de façon à arrêter la translation d'un chariot 16 sortant du module 10, mais de façon à autoriser la translation d'un chariot 16 entrant sur le module 10.

Grâce à leur fonctionnement mécanique, ces butées 32 sont plus fiables que des butées à actionnement électrique.

Avantageusement, les éléments de guidage 12 adjacents à un module de transfert 10 selon l'invention sont aussi équipés de moyens similaires d'arrêt 66 de la translation d'un chariot robotisé 16 à leur extrémité d'aboutement avec ce module 10.

En vue de garantir la précision de l'aboutement entre le module 10 selon l'invention et chaque élément de guidage 12 adjacent, le corps 30 comprend à ses extrémités avant 62 et arrière 64 des moyens de positionnement 78 par centrage entre le module de transfert 10 et le ou les élément(s) de guidage 12 adjacents auquel (auxquels) il doit être abouté.

Ces moyens de positionnement 78 par centrage prennent de préférence la forme d'un clavetage en croix 79, visible sur les figures 2 et 3.

Ce clavetage en croix 79 est formé par quatre rainures de clavetage et/ou surépaisseurs de clavetage 81, perpendiculaires entre elles, et prévues sur les parois d'extrémité 46,48 du module 10.

Bien entendu, les parois d'aboutement des éléments de guidage 12 adjacents sur lesquelles viennent s'abouter les parois d'extrémité 46,48 du module 10 comprennent des rainures et/ou des surépaisseurs de formes et de positions coopérant avec les rainures de clavetage et/ou les surépaisseurs de clavetage 81 prévues sur les parois d'extrémité 46,48 du module 10.

De préférence, chaque paroi d'extrémité 46,48 d'un module 10, et donc chaque paroi d'aboutement d'un élément de guidage 12 adjacent, comprend deux rainures de clavetage et deux surépaisseurs de clavetage 81 : chaque rainure se situant dans une direction parallèle à celle d'une surépaisseur et perpendiculaire à la direction de l'autre rainure, et chaque surépaisseur se situant dans une direction parallèle à celle d'une rainure et perpendiculaire à la direction de l'autre surépaisseur.

En variante, seules quatre rainures de clavetage ou quatre surépaisseurs de clavetage peuvent être prévues sur chaque paroi d'extrémité 46,48 d'un module 10 : chaque rainure/surépaisseur étant alors parallèle à une autre rainure/surépaisseur et perpendiculaire aux deux autres rainures/surépaisseurs.

Ces moyens de positionnement 78 par centrage comprennent en outre des goujons de centrage 80 introduits dans des alésages 82 prévus dans les parois d'extrémité 46,48 du module 10, des alésages correspondants étant prévus dans les parois d'aboutement des éléments de guidage 12 adjacents.

Ces goujons de centrage 80 et ces alésages 82 améliorent la précision d'accostage entre un module 10 et un module adjacent 12.

En effet, ils permettent de mieux guider les rainures et/ou les surépaisseurs 81 les unes vers les autres lors de l'aboutement d'un module de transfert 10 avec un module adjacent 12.

Comme illustré en figure 3, les moyens de mise en rotation 34 du corps 30 comprennent un moteur électrique 84, un réducteur de vitesse 86 et un renvoi d'angle 88, l'axe de sortie du renvoi d'angle 88 étant fixé au support 32 et définissant l'axe de croisement AC autour duquel le corps 30 est mis en rotation.

Donc, le moteur électrique 84, le réducteur de vitesse 86 et le boîtier 90 du renvoi d'angle 88 forment la partie mobile 92 des moyens de mise en rotation 34 mise en mouvement avec le corps 30.

Ensuite, les moyens de mise en translation 36 du corps 30 comprennent un châssis 94 fixé sur la partie mobile 92 des moyens de mise en rotation 34, des liaisons glissières 96 reliant le corps 30 du module 10 à ce châssis 94 et permettant au corps 30 de se translater perpendiculairement à l'axe de croisement AC et le long de l'axe longitudinal A10 du module, et un vérin électrique 98 entrainant le corps 30 du module en translation par rapport à ce châssis 94, par rapport à la partie mobile 92 des moyens de mise en rotation 34, et donc par rapport au support 32.

Plus en détails, les liaisons glissières 96 prennent la forme de rails 100 sur lesquels coulissent des patins 102 fixés au châssis 94, et le châssis 94 comprend un axe 104 sur lequel vient se fixer une première extrémité 106 du vérin 98, l'autre extrémité 108 du vérin venant se fixer sur un axe 110 solidaire du corps 30, et par exemple maintenu par les deux parois latérales droite 38 et gauche 40 du corps 30.

En raison de la robotisation des chariots 16 circulant sur le module 10 et sur les éléments de guidage 12, il est prévu des moyens d'alimentation électriques des chariots.

De préférence, ces moyens d'alimentation électriques des chariots 16 prennent la forme de rails d'alimentation, non représentés sur les figures mais par exemple fixés entre les moyens de guidage 24,26 du module 10 et des éléments de guidage 12, les chariots 16 étant équipés de frotteurs venant au contact de ses rails d'alimentation lors de leurs déplacements en translation. En effet, l'alimentation électrique des chariots 16 par des chaînes porte-câbles n'est plus envisageable avec les mobilités du module 10 selon l'invention.

Parallèlement, les moyens de mise en rotation 34 et de mise en translation 36 du corps 30 sont alimentés indépendamment, et par exemple par l'intermédiaire d'une alimentation par induction traversant le support 32.

La présente invention couvre aussi une première installation 112 de guidage en translation d'au moins un chariot robotisé 16 telle que celle illustrée en figure 1 par exemple, cette première installation comprenant au moins un élément de guidage 12 et au moins un module de transfert 10 selon l'invention.

Dans l'exemple représenté en figure 1, deux modules de transfert 10 sont utilisés pour déplacer un pont 114 supportant un bras 116 monté en translation longitudinalement et perpendiculairement à ce pont 114, les chariots 16 pouvant passer d'une des deux routes de guidage parallèles 14-1 et 14-3 à l'autre grâce aux deux modules 10 et à la troisième route de guidage 14-2 faisant office de route de jonction entre les deux routes parallèles.

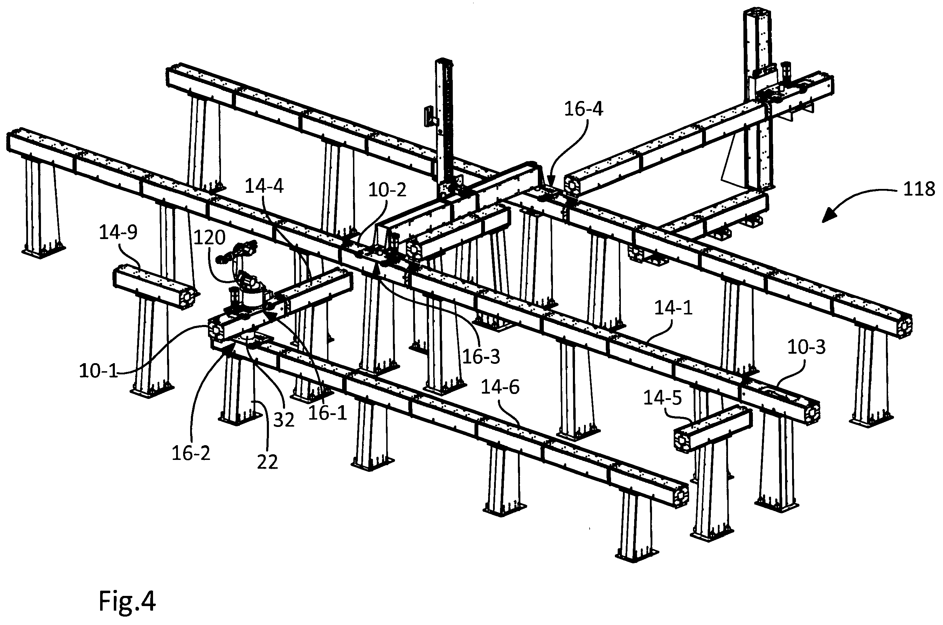

Comme l'illustre la figure 4, la présente invention couvre aussi une deuxième installation 118 de guidage en translation dans laquelle au moins un premier chariot robotisé 16-1 est guidé sur un module de transfert 10-1 monté sur un deuxième chariot robotisé 16-2 par l'intermédiaire de son support 32.

Ainsi, en déplaçant en translation le deuxième chariot robotisé 16-2 le long d'une route de guidage secondaire 14-6 parallèle à une route de guidage principale 14-1, il est possible d'amener rapidement le module de transfert 10-1, et donc l'outil robot 120 qu'il transporte, d'un point à un autre d'une route de guidage principale 14-1, ou vers une autre route de guidage auxiliaire 14-9, et cela sans utiliser la route de guidage principale 14-1.

Bien entendu, des routes de jonction 14-4,14-5 et d'autres modules de transfert 10-2,10-3 permettent le transit du premier chariot 16-1 entre le module 10-1 et la route de guidage principale 14-1 ou la route de guidage auxiliaire 14-9.

Cette deuxième installation 118 avec une route de guidage secondaire est particulièrement intéressante dans le cas ou différents chariots robotisés 16-1,16-3,16-4 peuvent être amenés à se croiser sur la même route de guidage principale 14-1.

Enfin, la présente invention couvre aussi une installation 118 de guidage en translation comprenant une partie 122 dans laquelle un module de transfert 10-4 est monté directement via son support 32 sur des moyens de guidage en translation 124.

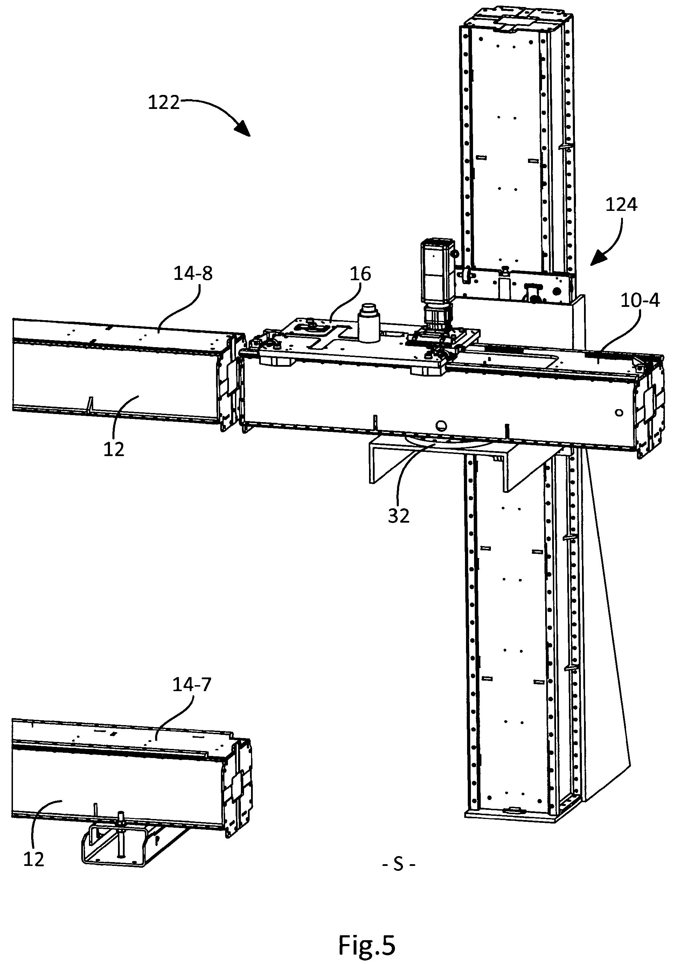

Cette translation, verticale dans l'exemple représenté en figure 5, permet de transférer un chariot robotisé 16 entre au moins deux routes de guidage 14-7,14-8 situées sur des niveaux différents, c'est à dire à différentes hauteurs par rapport au sol S.

En variante, les moyens de guidage en translation 124 pourraient aussi permettre de translater le module 10 selon une direction horizontale ou inclinée par rapport aux directions horizontale et verticale.

Bien entendu, le module de transfert 10 selon l'invention et les éléments de guidage 12 peuvent aussi être utilisés pour la réalisation de route de guidage 14-7 au sol S.

De manière générale, les installations 112 et 118 réalisées avec un ou plusieurs modules de transfert 10 selon l'invention permettent aussi de limiter le nombre de chariots robotisés 16 utilisés, et donc de réduire le coût de l'installation.

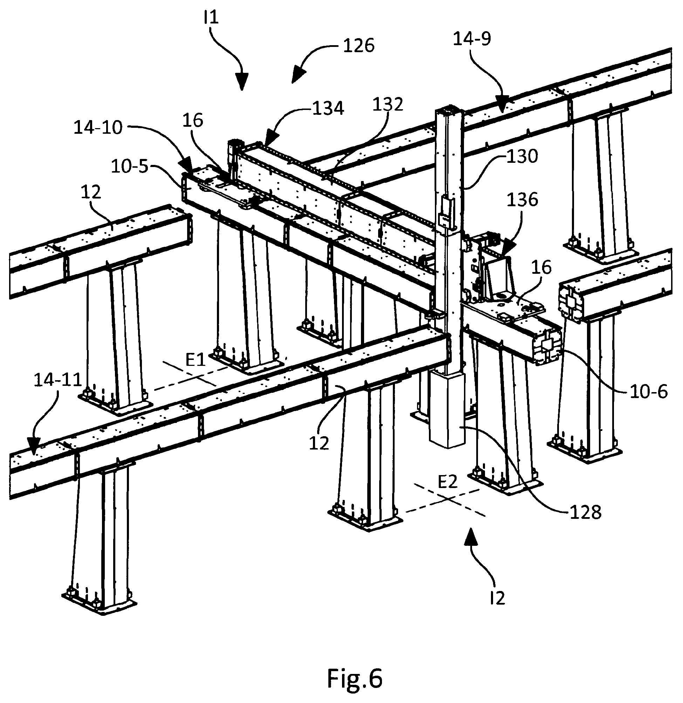

Avantageusement, et comme l'illustre la partie 126 d'une installation 118 de guidage de chariots robotisés 16 représentée en figure 6, le module de transfert 10 selon l'invention autorise des déplacements d'une charge ou d'un outil 128 vers des emplacements E1,E2 qui resteraient inaccessibles ou difficilement accessibles avec des installations de guidage selon l'art antérieur. Dans l'exemple représenté en figure 6, la charge ou l'outil 128 est déplacé en translation verticale par un bras vertical 130 monté en translation horizontale sur un pont 132, et ce pont 132 est monté, à chacune de ses extrémités 134,136, sur des chariots robotisés 16 pouvant circuler entre trois routes de guidage 14-9,14-10,14-11 grâce à deux modules de transfert 10-5,10-6 prévus aux intersections I1,I2 entre ces routes de guidage 14-9,14-10,14-11.

Comme l'illustre cette figure 6, la mobilité en rotation des modules de transfert 10-5,10-6, conjuguée à une longueur suffisante de ces modules 10-5,10-6, permet au bras 130, et donc à la charge ou à l'outil 128 qu'il transporte, de passer entre ce module 10-5,10-6 et le module adjacent 12 auquel il n'est plus abouté.

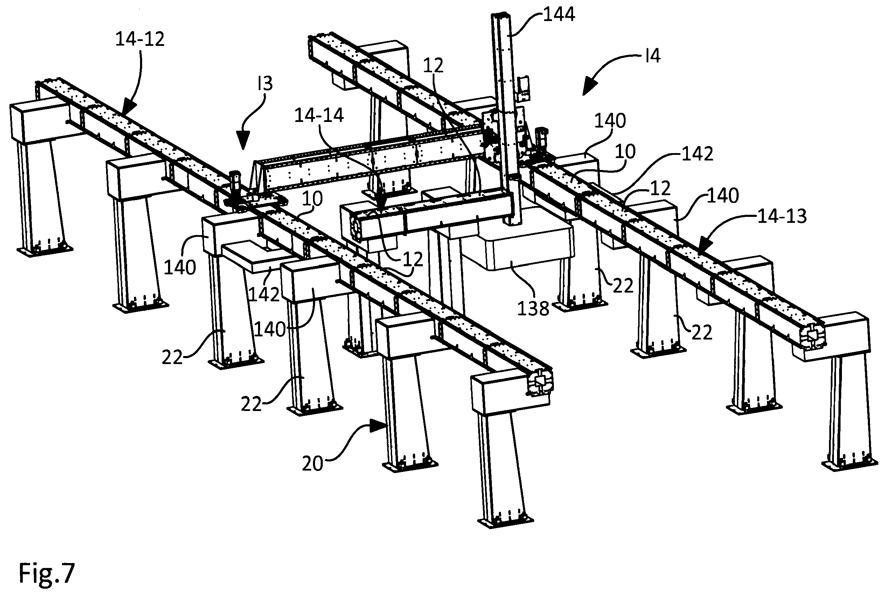

Comme l'illustre la figure 7, en vue de transporter une charge volumineuse 138 entre différentes routes de guidage 14-12,14-13,14-14 qui s'intersectent, les modules de transfert 10 selon l'invention et les éléments de guidage 12 formant ces routes de guidage 14-12,14-13,14-14 peuvent être montés de manière déportée, de préférence dans un plan horizontal, par rapport au bâti 20 qui les supporte, et par exemple par rapport au sommet des piliers 22 formant ce bâti 20.

A cet effet, des déports droits 140 permettent de décaler les éléments de guidage 12 par rapport aux éléments 22 du bâti 20 qui les supporte, et des déports en angle 142 permettent de décaler les modules de transfert 10 par rapport aux éléments 22 du bâti 20 qui les supportent aux intersections I3,I4 entre les différentes routes de guidage 14-12,14-13,14-14. Avantageusement, un déport en angle 142 supportant un module de transfert 10 dans une intersection I3,I4 est solidarisé au déport droit 140 supportant un des éléments de guidage 12 adjacents auquel il vient s'abouter.

Ainsi, la charge volumineuse 138 peut être déplacée partiellement sous le module de transfert 10 et entièrement entre deux piliers 22 du bâti 20 par le bras vertical 144 qui la supporte.

## Revendications

1. Module de transfert (10,10-1,10-2,10-3,10-4,10-5,10-6) d'un chariot robotisé (16) entre des éléments de guidage (12) non aboutés et adjacents, ce module de transfert (10,10-1,10-2,10-3,10-4,10-5,10-6) et ces éléments de guidage (12) comprenant des moyens de guidage (24,26) en translation du chariot (16) le long de leurs axes longitudinaux respectifs (A10,A12), le module de transfert (10,10-1,10-2,10-3,10-4,10-5,10-6) comprenant un corps (30) s'étendant le long de son axe longitudinal (A10), ce corps (30) étant relié à un bâti (20) par l'intermédiaire d'un support (32), des moyens de mise en translation (36) le long de l'axe longitudinal (A10) du module (10,10-1,10-2,10-3, 10-4,10-5,10-6) et des moyens de mise en rotation (34) du corps (30) autour d'un axe de croisement (AC) perpendiculaire à l'axe longitudinal (A10) du module (10,10-1,10-2,10-3,10-4,10-5,10-6), le module de transfert (10,10-1,10-2,10-3,10-4,10-5,10-6) étant **caractérisé en ce que** les moyens de mise en translation (36) relient le corps (30) à un châssis (94) et sont configurés pour assurer la translation dudit corps (30) par rapport audit châssis (94) et **en ce que** les moyens de mise en rotation (34) relient ledit châssis (94) au support (32) et sont configurés pour faire pivoter le châssis (94).

2. Module de transfert (10,10-1,10-2,10-3,10-4,10-5,10-6) selon la revendication précédente, dans lequel les moyens de mise en rotation (34) et les moyens de mise en translation (36) sont logés dans le corps (30) du module (10,10-1,10-2,10-3,10-4,10-5,10-6).

3. Module de transfert (10,10-1,10-2,10-3,10-4,10-5,10-6) selon la revendication précédente, dans lequel le corps (30) du module est un assemblage de six parois : deux parois latérales droite (38) et gauche (40), deux parois longitudinales inférieure (42) et supérieure (44), et deux parois d'extrémité avant (46) et arrière (48).

4. Module de transfert (10,10-1,10-2,10-3,10-4,10-5,10-6) selon la revendication précédente, dans lequel, le corps (30) du module (10,10-1,10-2,10-3,10-4,10-5,10-6) comprend une lumière (54) pour le passage d'une liaison (56) entre les moyens de mise en rotation (34) et le support (32).

5. Module de transfert (10,10-1,10-2,10-3,10-4,10-5,10-6) selon l'une des deux revendications précédentes, dans lequel au moins une paroi (38,40,42,44,46,48) du corps (30) du module (10,10-1,10-2,10-3,10-4,10-5,10-6) comprend une lumière d'accès (58) à l'intérieur du corps (30) du module.

6. Module de transfert (10,10-1,10-2,10-3,10-4,10-5,10-6) selon l'une des trois revendications précédentes, dans lequel la paroi longitudinale supérieure (44) reçoit sur sa surface extérieure (60) les moyens de guidage (26) en translation d'un chariot robotisé (16) le long de l'axe longitudinal (A10) du module (10,10-1,10-2,10-3,10-4,10-5,10-6).

7. Module de transfert (10,10-1,10-2,10-3,10-4,10-5,10-6) selon l'une des revendications précédentes, dans lequel le corps (30) comprend à ses extrémités avant (62) et arrière (64) des moyens d'arrêt (66) de la translation d'un chariot robotisé (16) le long de son axe longitudinal (A10).

8. Module de transfert (10,10-1,10-2,10-3,10-4,10-5,10-6) selon la revendication précédente, dans lequel, le corps (30) du module étant un assemblage de six parois : deux parois latérales droite (38) et gauche (40), deux parois longitudinales inférieure (42) et supérieure (44), et deux parois d'extrémité avant (46) et arrière (48), et la paroi longitudinale supérieure (44) recevant sur sa surface extérieure (60) les moyens de guidage (26) en translation d'un chariot robotisé (16) le long de l'axe longitudinal (A10) du module (10,10-1,10-2,10-3,10-4,10-5,10-6), les moyens d'arrêt (66) de la translation d'un chariot robotisé (16) se situent aux extrémités avant (68) et arrière (70) de la paroi longitudinale supérieure (44).

9. Module de transfert (10,10-1,10-2,10-3,10-4,10-5,10-6) selon l'une des deux revendications précédentes, dans lequel les moyens d'arrêt (66) de la translation d'un chariot robotisé (16) prennent la forme de butées (72) rétractables à came (74).

10. Module de transfert (10,10-1,10-2,10-3,10-4,10-5,10-6) selon l'une des revendications précédentes, dans lequel le corps (30) comprend à ses extrémités avant (62) et arrière (64) des moyens de positionnement (78) par centrage entre le module de transfert (10,10-1,10-2,10-3,10-4, 10-5,10-6) et le ou les élément(s) de guidage (12) adjacents auquel (auxquels) il doit être abouté.

11. Module de transfert (10,10-1,10-2,10-3,10-4,10-5,10-6) selon l'une des revendications précédentes, dans lequel les moyens de mise en rotation (34) du corps (30) comprennent un moteur électrique (84), un réducteur de vitesse (86) et un renvoi d'angle (88), l'axe de sortie du renvoi d'angle (88) étant fixé au support (32) et définissant l'axe de croisement (AC) autour duquel le corps (30) est mis en rotation, le moteur électrique (84), le réducteur de vitesse (86) et le boîtier (90) du renvoi d'angle (88) formant la partie mobile (92) des moyens de mise en rotation (34) mise en mouvement avec le corps (30), et dans lequel les moyens de mise en translation (36) du corps (30) comprennent le châssis (94) fixé sur la partie mobile (92) des moyens de mise en rotation (34), des liaisons glissières (96) reliant le corps (30) du module (10,10-1,10-2,10-3,10-4,10-5,10-6) à ce châssis (94) et permettant au corps (30) de se translater perpendiculairement à l'axe de croisement (AC) et le long de l'axe longitudinal (A10) du module, et un vérin électrique (98) entrainant le corps (30) du module en translation par rapport à ce châssis (94), par rapport à la partie mobile (92) des moyens de mise en rotation (34), et donc par rapport au support (32).

12. Installation (112,118) de guidage en translation d'au moins un chariot robotisé (16,16-1,16-2,16-3,16-4), l'installation (112,118) comprenant au moins un élément de guidage (12) et au moins un module de transfert (10,10-1,10-2,10-3,10-4,10-5,10-6) selon l'une des revendications précédentes.

13. Installation (112,118) de guidage en translation d'au moins un chariot robotisé (16,16-1,16-2,16-3,16-4) selon la revendication précédente, l'installation (112,118) comprenant au moins un élément de guidage (12) et au moins un module de transfert (10,10-1,10-2,10-3,10-4,10-5,10-6) montés de manière déportée dans un plan horizontal par rapport à au moins un élément (22) d'un bâti (20) qui les supporte.

## Patentansprüche

1. Transfermodul (10, 10-1, 10-2, 10-3, 10-4, 10-5, 10-6) eines robotergesteuerten Wagens (16) zwischen nicht verbundenen und angrenzenden Führungselementen (12), wobei das Transfermodul (10, 10-1, 10-2, 10-3, 10-4, 10-5, 10-6) und die Führungselemente (12) Führungsmittel (24, 26) für das Verfahren des Wagens (16) längs ihrer jeweiligen Längsachse (A10, A12) aufweisen, wobei das Transfermodul (10, 10-1, 10-2, 10-3, 10-4, 10-5, 10-6) einen sich längs seiner Längsachse (A10) erstreckenden Körper (30) aufweist, wobei der Körper (30) mittels einer Halterung (32) mit einem Unterbau (20) verbunden ist, und Mittel zum Ausführen einer Verschiebung (36) des Körpers (30) längs der Längsachse (A10) des Moduls (10, 10-1, 10-2, 10-3, 10-4, 10-5, 10-6) und Mittel zum Ausführen einer Rotation (34) des Körpers (30) um eine Kreuzungsachse (AC) im rechten Winkel zur Längsachse (A10) des Moduls (10, 10-1, 10-2, 10-3, 10-4, 10-5, 10-6) aufweist, wobei das Transfermodul (10, 10-1, 10-2, 10-3, 10-4, 10-5, 10-6) **dadurch gekennzeichnet ist, dass** die Mittel zum Ausführen einer Verschiebung (36) den Körper (30) mit einem Gestell (94) verbinden und dazu eingerichtet sind, eine Verschiebung des Körpers (30) bezüglich des Gestells (94) zu gewährleisten und dass die Mittel zum Ausführen einer Drehung (34) das Gestell (94) mit der Halterung (32) verbinden und dazu eingerichtet sind, das Gestell (94) eine Verschwenkbewegung ausführen zu lassen.

2. Transfermodul (10, 10-1, 10-2, 10-3, 10-4, 10-5, 10-6) nach dem vorhergehenden Anspruch, bei dem die Mittel zum Ausführen einer Drehung (34) und die Mittel zum Ausführen einer Verschiebung (36) in dem Körper (30) des Moduls (10, 10-1, 10-2, 10-3, 10-4, 10-5, 10-6) untergebracht sind.

3. Transfermodul (10, 10-1, 10-2, 10-3, 10-4, 10-5, 10-6) nach dem vorhergehenden Anspruch, bei dem der Körper (30) des Moduls ein Verbund von sechs Wänden ist: zwei Seitenwände, eine rechte (38) und eine linke (40), zwei Längswände, eine untere (42) und eine obere (44), und zwei Endwände, eine vordere (46) und eine hintere (48).

4. Transfermodul (10, 10-1, 10-2, 10-3, 10-4, 10-5, 10-6) nach dem vorhergehenden Anspruch, bei dem der Körper (30) des Moduls (10, 10-1, 10-2, 10-3, 10-4, 10-5, 10-6) eine Öffnung (54) für das Hindurchführen einer Verbindung (56) zwischen den Mitteln zum Ausführen der Drehung (34) und der Halterung (32) aufweist.

5. Transfermodul (10, 10-1, 10-2, 10-3, 10-4, 10-5, 10-6) nach einem der beiden vorhergehenden Ansprüche, bei dem wenigstens eine Wand (38, 40, 42, 44, 46, 48) des Körpers (30) des Moduls (10, 10-1, 10-2, 10-3, 10-4, 10-5, 10-6) eine Zugangsöffnung (58) zum Inneren des Körpers (30) des Moduls aufweist.

6. Transfermodul (10, 10-1, 10-2, 10-3, 10-4, 10-5, 10-6) nach einem der drei vorhergehenden Ansprüche, bei dem die obere Längswand (44) auf ihrer äußeren Oberfläche (60) Führungsmittel (26) für das Verfahren eines robotergesteuerten Wagens (16) entlang der Längsachse (A10) des Moduls (10, 10-1, 10-2, 10-3, 10-4, 10-5, 10-6) aufnimmt.

7. Transfermodul (10, 10-1, 10-2, 10-3, 10-4, 10-5, 10-6) nach einem der vorhergehenden Ansprüche, bei dem der Körper (30) an seinem vorderen (62) und hinteren (64) Ende Anhaltemittel (66) für das Verfahren eines robotergesteuerten Wagens (16) entlang seiner Längsachse (A10) aufweist.

8. Transfermodul (10, 10-1, 10-2, 10-3, 10-4, 10-5, 10-6) nach dem vorhergehenden Anspruch, bei dem der Körper (30) des Moduls ein Verbund von sechs Wänden ist: zwei seitliche Wände, eine rechte (38) und eine linke (40), zwei Längswände, eine untere (42) und eine obere (44), und zwei Endwände, eine vordere (46) und eine hintere (48), und bei dem die obere Längswand (44) auf ihrer äußeren Oberfläche (60) Führungsmittel (26) für das Verfahren eines robotergesteuerten Wagens (16) entlang der Längsachse (A10) des Moduls (10, 10-1, 10-2, 10-3, 10-4, 10-5, 10-6) aufnimmt, wobei sich die Anhaltemittel (66) für das Verfahren eines robotergesteuerten Wagens (16) am vorderen (68) und hinteren (70) Ende der oberen Längswand (44) befinden.

9. Transfermodul (10, 10-1, 10-2, 10-3, 10-4, 10-5, 10-6) nach einem der beiden vorhergehenden Ansprüche, bei dem die Anhaltemittel (66) für das Verfahren eines robotergesteuerten Wagens (16) die Gestalt von rückziehbaren Anschlägen (42) mit Nocken (74) aufweisen.

10. Transfermodul (10, 10-1, 10-2, 10-3, 10-4, 10-5, 10-6) nach einem der vorhergehenden Ansprüche, bei dem der Körper (30) an seinem vorderen (62) und hinteren (64) Ende Positioniermittel (78) für die Zentrierung zwischen dem Transfermodul (10, 10-1, 10-2, 10-3, 10-4, 10-5, 10-6) und dem oder den angrenzenden Führungselement(en) (12), mit dem (denen) dieses verbunden werden muss.

11. Transfermodul (10, 10-1, 10-2, 10-3, 10-4, 10-5, 10-6) nach einem der vorhergehenden Ansprüche, bei dem die Mittel zum Ausführen einer Drehung (34) des Körpers (30) einen Elektromotor (84), ein Untersetzungsgetriebe (86) und eine Eckumlenkung (88) aufweisen, wobei die Ausgangsachse der Eckumlenkung (88) an der Halterung (32) angebracht ist, und die Kreuzungsachse (AC) bildet, um die der Körper (30) in Drehung versetzt wird, wobei der Elektromotor (84), das Untersetzungsgetriebe (86) und das Gehäuse (90) der Eckumlenkung (88) den beweglichen Teil (92) der Mittel zum Ausführen der Drehung (34) bilden, der zusammen mit dem Körper (30) in Bewegung gesetzt wird, und bei dem die Mittel zum Ausführen der Verschiebung (36) des Körpers (30) das Gestell (94) aufweisen, das auf dem beweglichen Teil (92) der Mittel für das Ausführen der Drehung (34) angebracht ist, und Gleitverbindungen (96) aufweisen, die den Körper (30) des Moduls (10, 10-1, 10-2, 10-3, 10-4, 10-5, 10-6) mit dem Gestell (94) verbinden und es dem Körper (30) ermöglichen, sich im rechten Winkel zur Kreuzungsachse (AC) entlang der Längsachse (A10) des Moduls zu verschieben, und einen elektrischen Spindelantrieb (98) aufweisen, der den Körper (30) des Moduls bezüglich des Gestells (94) und bezüglich des beweglichen Teils (92) der Mittel zum Ausführen der Drehung (34) und damit bezüglich der Halterung (32) verschiebt.

12. Führungseinrichtung (112, 118) für das Verfahren von wenigstens einem robotergesteuerten Wagen (16, 16-1, 16-2, 16-3, 16-4), wobei die Einrichtung (112, 118) wenigstens ein Führungselement (12) und wenigstens ein Transfermodul (10, 10-1, 10-2, 10-3, 10-4, 10-5, 10-6) nach einem der vorhergehenden Ansprüche aufweist.

13. Führungseinrichtung (112, 118) für das Verfahren von wenigstens einem robotergesteuerten Wagen (16, 16-1, 16-2, 16-3, 16-4) nach dem vorhergehenden Anspruch, wobei die Einrichtung (112, 118) wenigstens ein Führungselement (12) und wenigstens ein Transfermodul(10, 10-1, 10-2, 10-3, 10-4, 10-5, 10-6) aufweist, die in einer horizontalen Ebene bezüglich wenigstens eines Elements (22) eines Unterbaus (20) versetzt montiert sind, der diese hält.

## Claims

1. A transfer module (10, 10-1, 10-2, 10-3, 10-4, 10-5, 10-6) for transferring a robotic carriage (16) between adjacent non-abutted guidance elements (12), this transfer module (10, 10-1, 10-2, 10-3, 10-4, 10-5, 10-6) and these guidance elements (12) comprising means (24, 26) for guiding the carriage (16) in translation along their respective longitudinal axes (A10, A12), the transfer module (10, 10-1, 10-2, 10-3, 10-4, 10-5, 10-6) comprising a body (30) extending along its longitudinal axis (A10), this body (30) being connected to a frame (20) by means of a support (32), means (36) for moving the body (30) in translation along the longitudinal axis (A10) of the module (10, 10-1, 10-2, 10-3, 10-4, 10-5, 10-6) and means (34) for rotating the body (30) about a cross axis (AC) perpendicular to the longitudinal axis (A10) of the module (10, 10-1, 10-2, 10-3, 10-4, 10-5, 10-6), the transfer module (10, 10-1, 10-2, 10-3, 10-4, 10-5, 10-6) being **characterised in that** the translation means (36) connects the body (30) to a chassis (94) and is configured so as to move said body (30) in translation with respect to said chassis (94) and **in that** the rotation means (34) connects said chassis (94) to the support (32) and is configured so as to pivot the chassis (94).

2. A transfer module (10, 10-1, 10-2, 10-3, 10-4, 10-5, 10-6) according to the preceding claim, in which the rotation means (34) and the translation means (36) are housed in the body (30) of the module (10, 10-1, 10-2, 10-3, 10-4, 10-5, 10-6).

3. A transfer module (10, 10-1, 10-2, 10-3, 10-4, 10-5, 10-6) according to the preceding claim, in which the body (30) of the module is an assembly of six walls: two right-hand (38) and left-hand (40) side walls, two bottom (42) and top (44) longitudinal walls, and two front (46) and rear (48) walls.

4. A transfer module (10, 10-1, 10-2, 10-3, 10-4, 10-5, 10-6) according to the preceding claim, in which the body (30) of the module (10, 10-1, 10-2, 10-3, 10-4, 10-5, 10-6) comprises an aperture (54) for a connection (56) between the rotation means (34) and the support (32) to pass.

5. A transfer module (10, 10-1, 10-2, 10-3, 10-4, 10-5, 10-6) according to one of the preceding two claims, in which at least one wall (38, 40, 42, 44, 46, 48) of the body (30) of the module (10, 10-1, 10-2, 10-3, 10-4, 10-5, 10-6) comprises an aperture (58) for access inside the body (30) of the module.

6. A transfer module (10, 10-1, 10-2, 10-3, 10-4, 10-5, 10-6) according to one of the preceding three claims, in which the top longitudinal wall (44) receives, on its external surface (60), the means (26) for translational guidance of a robotic carriage (16) along the longitudinal axis (A10) of the module (10, 10-1, 10-2, 10-3, 10-4, 10-5, 10-6).

7. A transfer module (10, 10-1, 10-2, 10-3, 10-4, 10-5, 10-6) according to one of the preceding claims, in which the body (30) comprises, at its front (62) and rear (64) ends, means (66) for stopping the translation of a robotic carriage (16) along its longitudinal axis (A10).

8. A transfer module (10, 10-1, 10-2, 10-3, 10-4, 10-5, 10-6) according to the preceding claim, in which, the body (30) of the module being an assembly of six walls: two right-hand (38) and left-hand (40) side walls, two bottom (42) and top (44) longitudinal walls, and two front (46) and rear (48) walls, and the top longitudinal wall (44) receiving, on its external surface (60), the means (26) for translational guidance of a robotic carriage (16) along the longitudinal axis (A10) of the module (10, 10-1, 10-2, 10-3, 10-4, 10-5, 10-6), the means (66) for stopping the translation of a robotic carriage (16) are situated at the front (68) and rear (70) ends of the top longitudinal wall (44).

9. A transfer module (10, 10-1, 10-2, 10-3, 10-4, 10-5, 10-6) according to one of the preceding two claims, in which the means (66) for stopping the translation of a robotic carriage (16) takes the form of retractable stops (72) with a cam (74).

10. A transfer module (10, 10-1, 10-2, 10-3, 10-4, 10-5, 10-6) according to one of the preceding claims, in which the body (30) comprises, at its front (62) and rear (64) ends, means (78) for positioning by centring between the transfer module (10, 10-1, 10-2, 10-3, 10-4, 10-5, 10-6) and the adjacent guidance element or elements (12) against which it is to be abutted.

11. A transfer module (10, 10-1, 10-2, 10-3, 10-4, 10-5, 10-6) according to one of the preceding claims, in which the means (34) for rotating the body (30) comprises an electric motor (84), a speed reducer (86) and an angle transmission (88), the output shaft of the angle transmission (88) being fixed to the support (32) and defining the cross axis (AC) about which the body (30) is rotated, the electric motor (84), the speed reducer (86) and the housing (90) of the angle transmission (88) forming the movable part (92) of the rotation means (34) moved with the body (30), and in which the means (36) for translating the body (30) comprises the chassis (94) fixed to the movable part (92) of the rotation means (34), slide connections (96) connecting the body (30) of the module (10, 10-1, 10-2, 10-3, 10-4, 10-5, 10-6) to this chassis (94) and enabling the body (30) to translate perpendicularly to the cross axis (AC) and along the longitudinal axis (A10) of the module, and an electric actuator (98) driving the body (30) of the module in translation with respect to this chassis (94), with respect to the movable part (92) of the rotation means (34), and therefore with respect to the support (32).

12. An installation (112, 118) for the translational guidance of at least one robotic carriage (16, 16-1, 16-2, 16-3, 16-4), the installation (112, 118) comprising at least one guidance element (12) and at least one transfer module (10, 10-1, 10-2, 10-3, 10-4, 10-5, 10-6) according to one of the preceding claims.

13. An installation (112, 118) for the translational guidance of at least one robotic carriage (16, 16-1, 16-2, 16-3, 16-4), the installation (112, 118) comprising at least one guidance element (12) and at least one transfer module (10, 10-1, 10-2, 10-3, 10-4, 10-5, 10-6) mounted so as to be offset in a horizontal plane with respect to at least one element (22) of a frame (20) that supports them.
